# EUROPÄISCHE PATENTANMELDUNG

(11) **EP 1 905 709 A2**
(43) Veröffentlichungstag der Anmeldung: **02.04.2008**
(21) Anmeldenummer: 07111561.2
(22) Anmeldetag: 02.07.2007
(51) Int. Cl.: B65G 47/91, B25J 15/06, B66C 1/02

(54) **Verfahren und Transportvorrichtung zum Transportieren von Gegenständen**

(30) Priorität: 29.09.2006 DE 102006046624
(71) Anmelder: Brötje-Automation GmbH, 26215 Wiefelstede (DE)
(72) Erfinder: Holtmeier, Gerhard, 23564 Lübeck (DE)
(74) Vertreter: Ellerbrächter, Dirk

(57) **Zusammenfassung**

Es wird ein Verfahren und eine Transportvorrichtung zum Transportieren von Gegenständen, insbesondere biegeschlaffen Bauteilen wie Karbonfasermatten oder dergleichen, wobei eine Haltefläche einer Halteinheit (8) zum Halten der Gegenstände zahlreiche Halteelemente (5) umfasst, vorgeschlagen. Eine zentrale Betätigungseinheit zum Betätigen und Nicht-Betätigen aller Halteelemente (5) ist vorgesehen, wobei in Abhängigkeit der Form und/oder Maße des zu haltenden Gegenstandes eine zentral betätigte Auswahl der Halteelemente (5) realisierbar ist.

## Beschreibung

Die Erfindung betrifft ein Verfahren sowie eine Transportvorrichtung zum Transportieren von Gegenständen, insbesondere biegeschlaffen Bauteilen wie Karbonfasermatten oder dergleichen, nach den Oberbegriffen der Ansprüche 1 bzw. 11.

### Stand der Technik

In industriellen Arbeitsprozessen werden sehr häufig Gegenstände von einem Ort zu einem anderen transportiert, um beispielsweise unterschiedlichste Arbeitsschritte an diesen Gegenständen durchzuführen.

Bei der Verwendung von biegeschlaffen Bauteilen wie Karbonfasermatten oder dergleichen für den Flugzeug-, Automobil- oder Schiffsbau etc. ergeben sich vor allem bei vergleichsweise großen Bauteilen aufgrund der Nachgiebigkeit bzw. leichten Verformbarkeit der Bauteile besondere Anforderungen an entsprechende Transportsysteme. Derartige Kohlenstoffmatten werden im Allgemeinen mittels bekannter Zusatzstoffe gehärtet, um für den jeweiligen Anwendungsfall eine definierte Form bzw. Festigkeit aufzuweisen. Häufig werden derartige Kohlenstoffmatten oder dergleichen auch für sogenannte Verbundwerkstoffe verwendet.

Vor allem vor dem Aushärten sind diese Matten besonders schwer zu handhaben. Hierfür sind bereits Transport- bzw. Fördervorrichtungen bekannt, die beispielsweise mittels Sauggreifer derartige Gegenstände aufnehmen und umsetzen.

Gerade bei vergleichsweise großen Bauteilen für z.B. Flugzeugflügel, Schiffsrümpfen oder dergleichen, sind bereits Greifer- bzw. Saugsysteme bekannt, die aus einer Vielzahl einzelner Halte- bzw. Saugelemente bestehen.

Bislang werden die zahlreichen Saugelemente bzw. die mit diesen realisierte gesamte Haltefläche an das entsprechende Bauteil bzw. dessen Geometrie angepasst, so dass die Haltefläche im Wesentlichen der Fläche einer Seite des Bauteils entspricht. Nachteilig hierbei ist jedoch, dass für unterschiedlichste Bauteile bzw. Gegenstände auch unterschiedlichste Haltesysteme mit entsprechenden Halteelementen verwendet werden müssen. Dies führt einerseits zu vergleichsweise hohen Betriebskosten und andererseits zu einem Zeitverlust, da die Haltesysteme beim Wechsel der handzuhabenden Gegenstände ebenfalls ausgetauscht werden müssen.

Darüber hinaus ist bereits bekannt, auch ein Haltesystem mit vergleichsweise großer Haltefläche zu verwenden, wobei die Haltefläche deutlich größer als die entsprechende Fläche bzw. Kontur des Bauteils ist. Dies führt allerdings dazu, dass nach dem Ausschneiden bzw. Abtrennen des Gegenstandes bzw. des Bauteils von einem größeren Stück, insbesondere einer Materialrolle etc., der um das benötigte Bauteil herum angeordnete Verschnitt oder auch ein zweites Bauteil vom Haltesystem ebenfalls ergriffen bzw. angesaugt wird. Dies ist jedoch unerwünscht, so dass derartig großflächig ausgebildete Haltesysteme für diese Anwendungsfälle nicht geeignet sind.

### Aufgabe und Vorteile der Erfindung

Aufgabe der Erfindung ist es demgegenüber ein Verfahren bzw. eine Transportvorrichtung zum Transportieren von Gegenständen, insbesondere biegeschlaffen Bauteilen wie Karbonfasermatten oder dergleichen, gemäß den Oberbegriffen der Ansprüche 1 bzw. 11 vorzuschlagen, womit die Nachteile des Stands der Technik vermieden bzw. zumindest deutlich reduziert werden.

Diese Aufgabe wird, ausgehend von einer Transportvorrichtung bzw. einem Verfahren der einleitend genannten Art, durch die kennzeichnenden Merkmale der Ansprüche 1 bzw. 11 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßes Verfahren bzw. eine erfindungsgemäße Transportvorrichtung dadurch aus, dass eine zentrale Betätigungseinheit zum Betätigen und nicht Betätigen aller Halteelemente vorgesehen ist, wobei in Abhängigkeit der Form und/oder Maße des zu haltenden Gegenstandes eine zentral betätigte Auswahl der Halteelemente realisierbar ist. Somit kann jedes Haltelement einzeln bzw. separat betätigt bzw. definiert nicht betätigt werden.

Gemäß der Erfindung wird hiermit ermöglicht, eine Separierung von dem abgetrennten bzw. ausgeschnittenen Gegenstand von diesen umgebenden Resten zu verwirklichen. Bei den Resten kann es sich um Abfallmaterial und/oder weiteren, gegebenenfalls in einem einzigen Arbeitsschritt gemeinsam abgetrennten bzw. herausgeschnittenen Gegenständen handeln. Dementsprechend werden gemäß der Erfindung neue Anwendungsmöglichkeiten erschlossen.

Mit Hilfe der Erfindung kann beispielsweise ein einziges Transport- bzw. Haltesystem für unterschiedlichste Gegenstände bzw. Bauteile mit unterschiedlichen Geometrien bzw. Konturen verwendet werden. Die zentrale Betätigungseinheit gewährleistet hierbei, dass in Abhängigkeit der Form bzw. der Maße des zu ergreifenden bzw. zu haltenden Gegenstandes lediglich die Halteelemente den Gegenstand ergreifen, die innerhalb dessen Kontur liegen. Dementsprechend wird ein unmittelbar am Gegenstand angeordneter Rest bzw. Abfall, beispielsweise entsprechender Rollenmaterialien nicht ergriffen. Dies führt zu einer vorteilhaften Separation des für die Bearbeitung bzw. Weiterbearbeitung interessierenden Gegenstandes vom beispielsweise zu entsorgenden Rest bzw. Abfall. Der Rest bzw. der abgetrennte Teil des Ausgangsteiles kann in beliebiger Weise beispielsweise vom Ort des entsprechenden Arbeitsschrittes entfernt werden.

Die Halteelemente können beispielsweise als berührungslose Greifer bzw. schwingendes Halteelemente, insbesondere zur Erzeugung von akustischen Wellen oder zur Erzeugung von sogenannten Levitationswellen gemäß der Druckschrift DE 101 21 742 ausgebildet werden.

Vorzugsweise sind die Halteelemente als Saugelemente mit einem mit Druck beaufschlagbaren Saugfluid zum Ansaugen der Gegenstände ausgebildet. Es hat sich in der Praxi gezeigt, dass vor allem mit Hilfe von Sauggreifern bzw. Saugelementen eine besonders vorteilhafte Art und Weise des Ergreifens und Weitertransportierens entsprechender Gegenstände, vor allem von biegeschlaffen Bauteilen wie Karbonfasermatten oder dergleichen, erfolgen kann. Bevorzugt wird als Saugfluid ein Gas bzw. Luft verwendet. Gerade Luft ist einfach zu handhaben bzw. neutral gegenüber den handzuhabenden Gegenständen.

In einer vorteilhaften Variante der Erfindung ist zumindest im Ruhezustand die Haltefläche der Halteeinheit im Wesentlichen als plane Haltefläche ausgebildet. Eine derart vorteilhaft ausgebildete Haltefläche ist vor allem für noch nicht ausgehärtete Karbonfasermatten etc. von besonderem Vorteil.

Alternativ zur zuvor dargelegten Variante kann die Haltefläche im Ruhezustand im Wesentlichen als gewölbte Fläche, vorzugsweise als Zylinderfläche, ausgebildet werden. Mit Hilfe einer derart vorteilhaft ausgebildeten Haltefläche kann einerseits bereits eine grobe oder gegebenenfalls auch eine exakte Anpassung der dreidimensionalen Form der Haltefläche an die dreidimensionale Form des zu haltenden Gegenstandes verwirklicht werden. Hiermit wird die Haltkraft bzw. das Halten der Gegenstände optimierbar.

Andererseits kann mit einer derart gewölbten bzw. als Zylinderfläche ausgebildeten Haltefläche auch erreicht werden, dass beispielsweise vergleichsweise lange Gegenstände wenigstens teilweise bzw. vollständig aufwickelbar sind. Beispielsweise ist die Transportvorrichtung gemäß der Erfindung derart ausgebildet, dass die Halteeinheit insbesondere um wenigstens eine Drehachse vorzugsweise ca. 180° oder 306° oder mehr als eine bzw. mehrere volle Umdrehungen drehbar ist.

Darüber hinaus kann die Halteeinheit an einem vorteilhaften Handhabungssystem angeordnet werden, so dass die Halteeinheit eine drehende und/oder eine lineare Bewegung ausführen kann. Beispielsweise sind hierfür entsprechende, bereits vielfach im Einsatz befindliche Roboterarme, Handhabungssysteme oder dergleichen verwendbar.

Mit einer derart vorteilhaften Transportvorrichtung kann beispielsweise die Halteeinheit zunächst an einem Schmalende des aufzuwickelnden Gegenstandes bzw. Bauteils positioniert werden und daran anschließend kann das Bauteil bzw. der Gegenstand ergriffen bzw. gehalten werden, insbesondere die Saugelemente, die sich innerhalb der Kontur des Gegenstands befinden, werden aktiviert. Anschließend kann in vorteilhafter Weise beispielsweise die Halteeinheit bzw. der zylinderförmige Wickelgreifer vorzugsweise synchron zu seiner Aufwickelbewegung bzw. Drehbewegung in Längsrichtung des Gegenstandes über dies verstellt bzw. bewegt werden. Hiermit wird erreicht, dass dieses stress- und verformungsfrei auf der Halteeinheit bzw. dem Wickelgreifer aufgewickelt wird. Dies ist vor allem bei Fasermatten bzw. Geweben wie Kohlefasermatten oder dergleichen von besonderem Vorteil, um ein Verschieben der einzelnen Fasern bzw. ein Verformen zu verhindern. Entsprechend formstabil bzw. ohne Veränderung der Form des Gegenstandes kann dieser gemäß der Erfindung von einem Ort zu einem anderen transportiert werden. Die realisierte, verbesserte Formgenauigkeit führt somit zu einer erhöhten Qualität der aus den transportierten Gegenständen herzustellenden Produkte.

Vorzugsweise sind die Halteelemente quer zur Haltefläche mit wenigstens einer Verstelleinheit verstellbar ausgebildet. Insbesondere ist jedem Halteelement jeweils eine separate Verstelleinheit zugeordnet. Mit Hilfe einer derartigen Verstelleinheit bzw. der zahlreichen Verstelleinheiten kann eine vorteilhafte Anpassung, insbesondere dreidimensionale Anpassung, an die Form des zu transportierenden Gegenstandes verwirklicht werden. Dies ist insbesondere bei relativ formstabilen und gewölbten Gegenständen, wie beispielsweise ausgehärteten Kohlefasermatten oder dergleichen, von besonderer Bedeutung.

Beispielsweise umfasst die Verstelleinheit eine Linearverstellung und/oder eine Querverstellung in Bezug zur Haltefläche des Halteelementes. Gegebenenfalls sind hydraulische oder pneumatische Kolbenzylindersysteme hierfür vorgesehen. Vorzugsweise sind Federsysteme, insbesondere Schraubenfedersysteme, als Verstelleinheit vorgesehen. Vorteil derartiger Federsysteme ist beispielsweise, dass diese sich an vergleichsweise formstabile Gegenstände im Wesentlichen selbstständig bei entsprechendem Anpressdruck an die Form der zu transportierenden Gegenstände anpassen können. Dies ist insbesondere bei Saugelementen bzw. Saugsystemen in besonderer Weise vorteilhaft.

Darüber hinaus ist die Verstellung der Halteelemente quer zur Haltefläche gerade auch bei gewölbten Halteflächen bzw. als Zylinderfläche ausgebildeten Halteeinheiten von besonderem Vorteil. Beispielsweise werden für das Ablegen bzw. Zwischenspeichern entsprechend aufgewickelter Gegenstände bzw. biegeschlaffer Bauteile die zahlreichen Halteelemente derart in Richtung Drehachse verstellt bzw. zurückgezogen, dass sich der aufgewickelte Gegenstand bzw. der Wickel in einfacher Weise lösen kann. Anschließend kann die Halteeinheit aus diesem aufgewickelten Gegenstand bzw. Wickel herausgezogen werden. Hiermit kann der Gegenstand bzw. der Wickel z.B. in einem Ablagefach oder dergleichen, insbesondere ohne Formveränderung bzw. -verzug, zwischengespeichert bzw. abgelegt werden.

Bei Bedarf bzw. in umgekehrter Weise kann ein derartig aufgewickelter Gegenstand bzw. Wickel von einem wie zuvor dargelegt ausgebildeten Greifer bzw. Halteeinheit auch wieder entsprechend aufgenommen und weitertransportiert werden. Hierfür werden die Halteelemente wieder in vorteilhafter Weise zusammengezogen bzw. in Richtung Drehachse verstellt, so dass die Halteeinheit in den aufgewickelten Gegenstand bzw. den Wickel ohne Berührung des Wickels in diesen eingeführt werden kann.

Anschließend werden die Halteelemente in Richtung des einen größeren Durchmesser aufweisenden Wickels verstellt bzw. aufgespreizt, so dass dieser in vorteilhafter Weise gehalten und entsprechend zu seiner Verwendungsstelle, insbesondere ohne Formveränderung bzw. -verzug, transportierbar ist.

Zum Ablegen bzw. Loslassen der aufgewickelten Gegenstände bzw. Wickel können diese mit dem Schmalende am Ablageort bzw. an einem Ende des Ablageortes angelegt und vorzugsweise unter synchroner, linearer Verstellung bzw. Bewegung der Halteeinheit zusammen mit einer rotatorischen Bewegung abgewickelt bzw. in eine entsprechende Form oder dergleichen, insbesondere ohne Formveränderung bzw. -verzug, hineingelegt werden. In dieser Form kann beispielsweise die Aushärtung entsprechend biegeschlaffer Karbonfasermatten oder dergleichen erfolgen.

Grundsätzlich wird beispielsweise bei derartigen Fasermatten bzw. Geweben, die in vorteilhafter Weise auf einem zylinderförmig ausgebildeten Haltesystem aufgewickelt sind, erreicht, dass weder beim Aufwickeln, noch beim Zwischenspeichern oder beim Ablegen eine Verformung des Gegenstandes bzw. der Matte erfolgt. Hierdurch wird die Qualität des entsprechend transportieren Gegenstandes bzw. der Matte nicht beeinträchtigt, so dass eine besonders hohe Maßbeständigkeit des zu produzierenden Produktes erreicht wird.

Im Gegensatz zu einem derart vorteilhaften Wickelsystem wurden gemäß dem Stand der Technik bislang vergleichsweise lange, im Wesentlichen plane Haltesysteme verwendet, die entsprechend unhandlich sind. Gerade im Flugzeugbau etc. werden vielfach besonders lange Gegenstände verwendet.

Vorteilhafterweise ist die zentrale Betätigungseinheit als elektronische Kontrolleinheit zum Kontrollieren der einzelnen Halteelemente ausgebildet. Insbesondere werden die zu betätigenden Halteelemente mittels elektronischer Daten des Gegenstandes betätigt und entsprechend die nicht zu betätigenden Halteelemente nicht betätigt. Vorzugsweise sind Ventile oder dergleichen für das Saugfluid als elektronisch zu betätigende Stellorgane ausgebildet. Eine vorteilhafte elektronische Kontrolle bzw. Steuerung der Halteelemente ist mit deutlich weniger Aufwand zu realisieren, wie beispielsweise eine hydraulische oder pneumatische Steuerung der Halteelemente.

Weiterhin kann mit dieser Variante der Erfindung die im Allgemeinen bereits vorhandenen elektronischen Konstruktionsdaten der Gegenstände unmittelbar zum Betätigen bzw. nicht Betätigen der Halteelemente herangezogen werden. Dementsprechend vereinfacht wird die Kontrolle bzw. Steuerung der Halteelemente.

Generell kann gemäß der Erfindung die Herstellung von Karbonfaserbauteilen, z.B. für Flugzeuge, Automobile oder dergleichen, mittels Karbonfasermatten als Verstärkungsteile vorteilhaft gehandhabt bzw. transportiert werden. Derartige Verstärkungsteile werden formgenau häufig aus Rollenmaterial beispielsweise auf einem sogenannten Schneidetisch oder dergleichen ausgeschnitten. Hierzu wird in vorteilhafter Weise ein Laserschneidverfahren, Stanzverfahren oder dergleichen eingesetzt. Dementsprechend verbleiben auf dem Schneidetisch die ausgeschnittenen Bauteile sowie darum herum ein Rest bzw. das entsprechende Abfallmaterial.

Gemäß der Erfindung wird nun ein weitestgehend automatisierter Weiterverarbeitungsprozess realisierbar, wobei die ausgeschnittenen Bauteile gezielt und separiert vom Abfall vom Schneidetisch entnommen werden. Dies kann unter anderem durch Sauggreifer etc. geschehen, die mit einem leichten Unterdruck das biegeschlaffe Bauteil flächig ansaugen und halten und entsprechend abtransportieren. Beispielsweise können ein vorteilhafter Portalroboter oder sonstige bereits bekannte Handhabungssysteme derartige Sauggreifer über dem Bauteil platzieren, das Bauteil separat vom Abfall aufnehmen und beispielsweise in einem Zwischenlager ablegen oder es direkt zur Weiterverwendung transportieren.

Durch die gezielte Betätigung und Nicht-Betätigung der einzelnen Halteelemente bzw. Segmente der Halteeinheit wird eine Anpassung an die Bauteilgröße und -form, vorzugsweise mittels dem CAD-Datensatz des Bauteils, realisiert. Dieser Datensatz, der z.B. auch für das Schneiden auf dem Schneidetisch verwendbar ist, kann in entsprechender Weise erfindungsgemäß das Anschalten und Ausschalten der benötigten und nicht benötigten Saugsegmente definieren.

Der wesentliche Vorteil der erfindungsgemäßen Methode ist, dass vor allem ein häufiger Wechsel der Halteeinheit unnötig wird, d.h. gemäß der Erfindung kann eine einzige Halteeinheit für unterschiedlichste Bauteile bzw. Gegenstände verwendet werden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische perspektivische Ansicht einer segmentierten Saugeinheit gemäß der Erfindung,
- Figur 2: schematisch eine Unteransicht der Saugeinheit gemäß Figur 1,
- Figur 3: schematisch, perspektivisch einen Wickesauggreifer gemäß der Erfindung und
- Figur 4: eine schematische, perspektivisch dargestellte Fertigungslinie mit erfindungsgemäßen Haltesystemen.

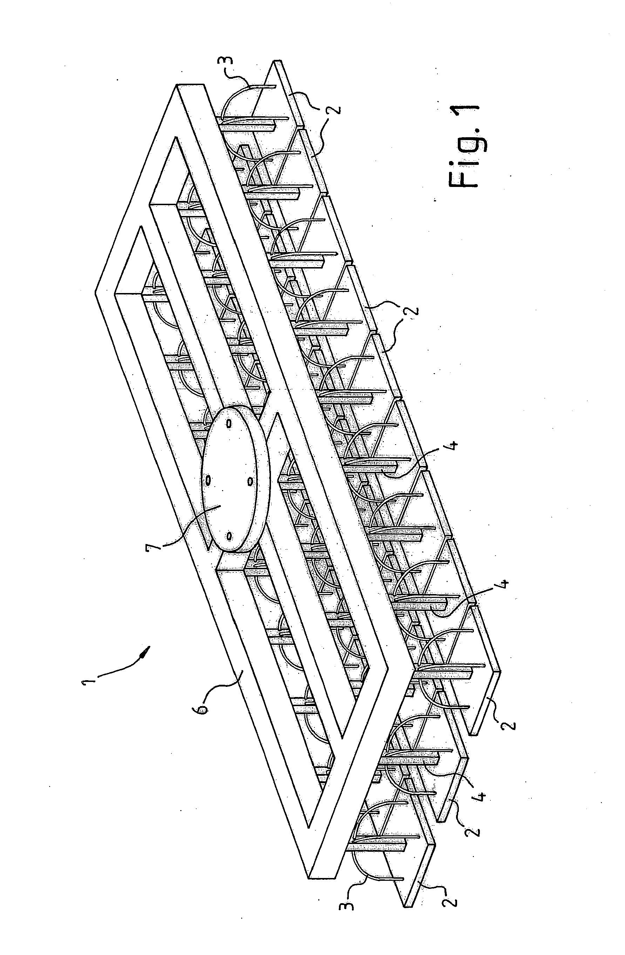

In Figur 1 ist perspektivisch ein Sauggreifer 1 mit zahlreichen Saugplatten 2 dargestellt. Die Saugplatten 2 werden mit Unterdruck mittels Vakuumschläuchen 3 beaufschlagt.

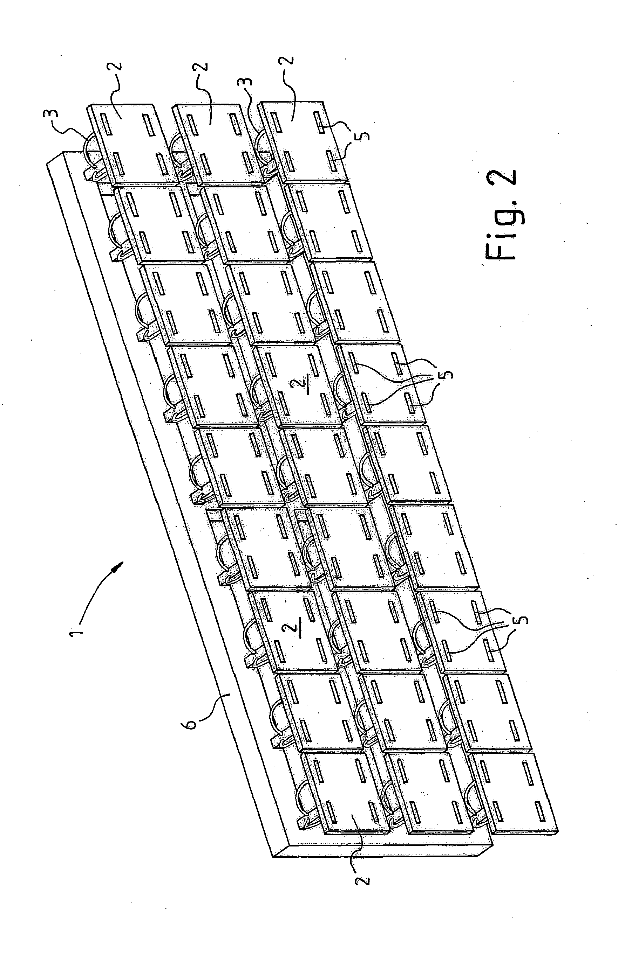

In Figur 2 wird verdeutlicht, wie die Unterseite des Sauggreifers 1 bzw. der Saugplatten 2 ausgebildet ist. Die Saugplatten 2 umfassen im dargestellten Ausführungsbeispiel vier Saugtaschen 5 je Saugplatte 2, die jeweils mittels einem Gitter oder dergleichen in vorteilhafter Weise abgedeckt sind. Dies verhindert den Eintrag von Schmutzpartikeln etc. in das Vakuumsystem.

Vor allem Figur 1 zeigt, dass die Saugplatten 2 mittels Federstäben 4 mit einem Rahmen 6 verbunden sind. Die Federstäbe 4 ermöglichen insbesondere eine Verstellung der Saugplatten 2 in Richtung zum Rahmen 6 und darüber hinaus auch eine Verstellung quer zur Längsachse des Federstabes 4. Hierdurch wird eine vorteilhafte Anpassung an entsprechend dreidimensional ausgebildete Gegenstände bzw. Bauteile realisiert.

Der Rahmen 6 umfasst eine Platte 7, die für die Anbindung an ein Handlingsystem bzw. einen Roboterarm oder dergleichen vorgesehen ist. Entsprechende Handlingsysteme bzw. Roboterarme sind bereits seit langem in industriellen Fertigungsanlagen gebräuchlich. Hierdurch wird insbesondere eine Verstellbarkeit des Sauggreifers 1 in X- und/oder in Y- und/oder in Z-Richtung in vorteilhafter Weise realisiert. Zudem kann mit entsprechend vorhandenen Handlingsystemen bzw. Roboterarmen oder dergleichen auch eine Rotation um bis zu drei (orthogonal zueinander ausgerichteten) Rotationsachsen verwirklicht werden, so dass insgesamt sechs Freiheitsgrade möglich sind.

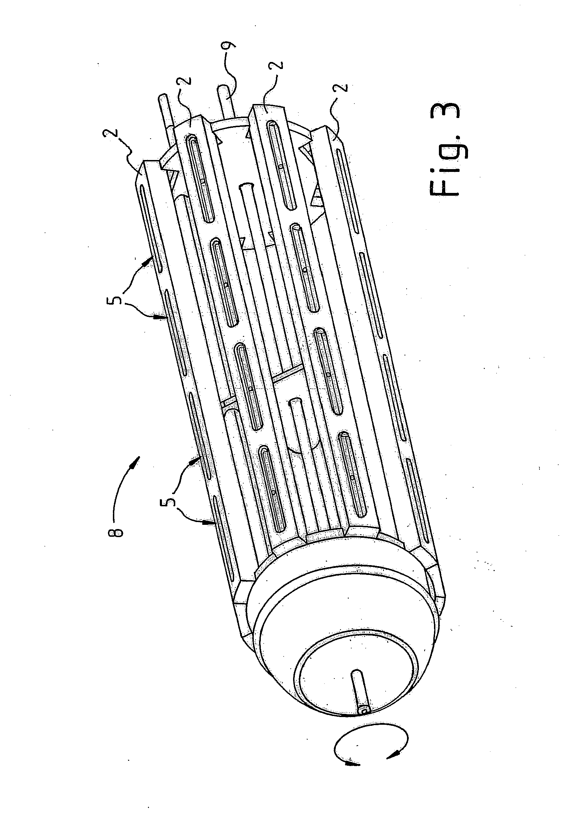

In Figur 3 ist schematisch ein Wickelgreifer 8 dargestellt. Der Wickelgreifer 8 ist um eine Drehachse 9 rotierbar. Gemäß der Erfindung umfasst auch der Wickelgreifer 8 mehrere bzw. zahlreiche Saugplatten 2, die beim dargestellten Ausführungsbeispiel jeweils vier Saugtaschen 5 aufweisen. In Figur 3 ist lediglich aus Gründen der Übersichtlichkeit auf die Darstellung entsprechender Vakuumschläuche 3 verzichtet worden. Entsprechend wurde in der Figur 3 auch auf die Darstellung einer wie z.B. oben bereits erläuterten Anbindung an ein Handlingsystem bzw. einen Roboterarm oder dergleichen verzichtet.

Mit Hilfe eines derartigen Wickelgreifers kann beispielsweise ein besonders lang ausgebildetes Bauteil, wie z.B. eine Karbonfasermatte, beispielsweise durch Rotation um die Drehachse 9 auf den Wickelgreifer 8 aufgewickelt werden.

Um beim Aufwickeln des Bauteiles bzw. der Fasermatte keine Formveränderung zu erwirken, wird beispielsweise der Wickelgreifer 8 an einem Schmalende des Bauteiles angeordnet und die entsprechende Saugplatte 2 bzw. lediglich einzelne Saugtaschen 5 aktiviert, so dass das Bauteil am Wickelgreifer 8 vorteilhaft fixiert ist. Anschließend kann durch Rotation um die Drehachse 9 sowie mit einer Linearverstellung des Wickelgreifers 8 längs des Bauteils dieses auf dem Wickelgreifer 8 in vorteilhafter Weise aufgewickelt werden.

Gerade bei Fasermatten oder dergleichen, durch die durchaus ein Fluid bzw. Luft wenigstens teilweise durchströmen kann, ist es denkbar, dass entsprechende Fasermatten in mehreren Lagen auf einem einzigen Wickelgreifer 8 aufgebracht werden können.

Mit Hilfe eines derartigen Wickelgreifers 8 können besonders lang ausgebildete Bauteile bzw. Fasermatten sehr platzsparend transportiert und gegebenenfalls zwischengespeichert werden.

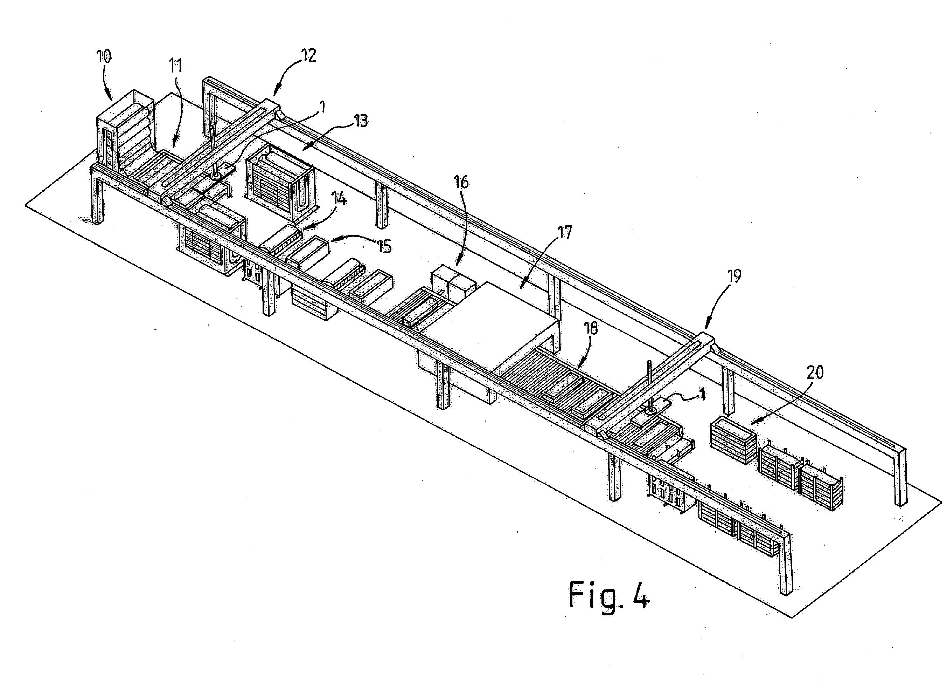

In Figur 4 ist schematisch eine entsprechende Fertigungslinie für biegeschlaffe Bauteile wie Karbonfasermatten etc. dargestellt. Beispielsweise werden Rollen, insbesondere Kohlefaserrollen, in einem Rollenpaternoster 10 mit Abrollsystem gelagert. Hiermit werden die Matten derart abgerollt, dass diese auf einem Schneidetisch 11 angeordnet werden können.

Auf dem Schneidetisch 11 wird beispielsweise mittels Laserschneidverfahren, Stanzverfahren oder dergleichen das gewünschte Bauteil bzw. die gewünschte Form herausgeschnitten bzw. abgetrennt. Anschließend wird mittels einem Handling-Portal 12 mit Sauggreifer 1 oder einem Wickelgreifer 8 das gewünschte Bauteil ergriffen und separat von der Rolle bzw. dem Abfall beispielsweise zu einem Zuschnittspeicher 13 transportiert. Der Rest bzw. der Abfall der Fasermatte wird ohne nähere Darstellung beispielsweise in einen entsprechenden Abfallbehälter weiterverschoben.

Mittels dem Sauggreifer 1 wird das Bauteil aus dem Zuschnittspeicher 13 zu einem Form-Block 14 transportiert. Der Form-Block 14 weist eine Form 15 auf, die beispielsweise eine dreidimensionale bzw. gewölbte Form aufweist.

In einer Vakuumstation 16 werden die Fasermatten mit Harz getränkt und anschließend werden in einem Ofen 17 der Form-Block 14 mit Fasermatte und Harz erhitzt, so dass eine Aushärtung erfolgt. Die Entformung 18 gewährleistet die völlige Aushärtung des Harzes. Anschließend wird wiederum mittels einem Handling-Portal 19 für die Formen die ausgehärtete Fasermatte separat mittels einem Sauggreifer 1 ergriffen und beispielsweise in einen Formenspeicher 20 transportiert. Von diesem aus erfolgt dann die Weiterbearbeitung des Bauteils.

### Bezugszeichenliste

- 1: Sauggreifer
- 2: Saugplatte
- 3: Schlauch
- 4: Stab
- 5: Saugtasche
- 6: Rahmen
- 7: Platte
- 8: Wickelgreifer
- 9: Drehachse
- 10: Paternoster
- 11: Schneidetisch
- 12: Handling-Portal
- 13: Speicher
- 14: Form-Block
- 15: Form
- 16: Station
- 17: Ofen
- 18: Entformung
- 19: Handling-Portal
- 20: Speicher

## Patentansprüche

1. Transportvorrichtung zum Transportieren von Gegenständen, insbesondere biegeschlaffen Bauteilen wie Karbonfasermatten oder dergleichen, wobei eine Haltefläche einer Halteinheit (1, 8) zum Halten der Gegenstände zahlreiche Halteelemente (2) umfasst, **dadurch gekennzeichnet, dass** eine zentrale Betätigungseinheit zum Betätigen und Nicht-Betätigen aller Halteelemente (2) vorgesehen ist, wobei in Abhängigkeit der Form und/oder Maße des zu haltenden Gegenstandes eine zentral betätigte Auswahl der Halteelemente (2) realisierbar ist.

2. Transportvorrichtung nach Anspruch 1, **dadurch gekennzeichnet, dass** die Halteelemente (2) als Saugelemente (2) mit einem mit Druck beaufschlagbaren Saugfluid zum Ansaugen der Gegenstände ausgebildet ist.

3. Transportvorrichtung nach einem der vorgenannten Ansprüche, **dadurch gekennzeichnet, dass** zumindest im Ruhezustand die Haltefläche im Wesentlichen als plane Haltefläche ausgebildet ist.

4. Transportvorrichtung nach einem der vorgenannten Ansprüche, **dadurch gekennzeichnet, dass** zumindest im Ruhezustand die Haltefläche im Wesentlichen als gewölbte Haltefläche ausgebildet ist.

5. Transportvorrichtung nach einem der vorgenannten Ansprüche, **dadurch gekennzeichnet, dass** zumindest im Ruhezustand die Haltefläche im Wesentlichen als Zylinderfläche ausgebildet ist.

6. Transportvorrichtung nach einem der vorgenannten Ansprüche, **dadurch gekennzeichnet, dass** die Halteelemente (2) quer zur Haltefläche mit Hilfe wenigstens einer Verstelleinheit (4) verstellbar ausgebildet sind.

7. Transportvorrichtung nach einem der vorgenannten Ansprüche, **dadurch gekennzeichnet, dass** jedem Halteelement (2) jeweils eine separate Verstelleinheit (4) zugeordnet ist.

8. Transportvorrichtung nach einem der vorgenannten Ansprüche, **dadurch gekennzeichnet, dass** die zentrale Betätigungseinheit als elektronische Kontrolleinheit zum Kontrollieren der einzelnen Halteelemente (2) ausgebildet ist.

9. Transportvorrichtung nach einem der vorgenannten Ansprüche, **dadurch gekennzeichnet, dass** die zentrale Betätigungseinheit mittels elektronischer Daten des Gegenstandes die zu betätigenden Halteelemente (2) betätigt und die nicht zu betätigenden Halteelemente (2) nicht betätigt.

10. Transportvorrichtung nach einem der vorgenannten Ansprüche, **dadurch gekennzeichnet, dass** die Transportvorrichtung zum Transportieren des von einem Rest eines Ausgangsteiles wenigstens teilweise umgebenen Gegenstandes ausgebildet ist.

11. Verfahren zum Transportieren von Gegenständen, insbesondere biegeschlaffen Bauteilen wie Karbonfasermatten oder dergleichen, wobei wenigstens ein Gegenstand aus einem Ausgangsteil abgetrennt, insbesondere abgeschnitten wird, so dass ein Rest des Ausgangsteiles wenigstens teilweise den Gegenstand umgibt, wobei eine Haltefläche einer Halteinheit (1, 8) zum Halten der Gegenstände zahlreiche Halteelemente (2) umfasst, **dadurch gekennzeichnet,**
**dass** eine zentrale Betätigungseinheit zum Betätigen und
Nicht-Betätigen aller Halteelemente (2) vorgesehen wird, wobei in Abhängigkeit der Form und/oder Maße des zu haltenden Gegenstandes eine zentral betätigte Auswahl der Halteelemente (2) realisierbar wird, so dass der abgetrennte Gegenstand vom Ort des Abtrennens abtransportierbar wird und der Rest des Ausgangsteils am Ort des Abtrennens verbleibt.

12. Verfahren nach Anspruch 11, **dadurch gekennzeichnet, dass** eine Transportvorrichtung nach einem der vorgenannten Ansprüche verwendet wird.
